# EUROPÄISCHE PATENTANMELDUNG

(11) **EP 2 837 289 A1**
(43) Veröffentlichungstag der Anmeldung: **18.02.2015**
(21) Anmeldenummer: 14150980.2
(22) Anmeldetag: 13.01.2014
(51) Int. Cl.: A23C 19/09, B26D 7/01, B26D 7/02, B26D 7/04

(54) **Verfahren und Vorrichtung zur Zubereitung einer Käsespeise und Käsespeise**

(30) Priorität: 15.08.2013 EP 13180608; 13.09.2013 EP 13184464
(71) Anmelder: A O Ideas GmbH, 9322 Egnach (CH)
(72) Erfinder: Carrasco, César, 9322 Egnach (CH)
(74) Vertreter: Rutz & Partner

(57) **Zusammenfassung**

Das Verfahren dient der Zubereitung einer Käsespeise für die ein Käseprodukt und eine Stärkepflanze bereitgestellt, bearbeitet, erwärmt und gemischt werden. Erfindungsgemäss ist das Käseprodukt ein aus der Verarbeitung von Käse resultierendes Restschnittgut, das eine Käserinde umfasst, und das durch Schneiden oder Reiben oder zerkleinert wird. Die Stärkepflanze wird erwärmt, püriert und anschliessend dem zerkleinerten Käseprodukt zugegeben, wonach das Käseprodukt und die pürierte Stärkepflanze gemischt und ausgeformt werden. Das aus der Verarbeitung von Käse resultierendes Schnittgut wird vorzugsweise mittels einer Schneidevorrichtung (1) bearbeitet, welche ein Greifvorrichtung (5) mit wenigstens einem Greifwerkzeug (51A, 51B) umfasst, das mit einer pneumatischen Einheit (50) verbunden ist.

## Beschreibung

Die vorliegende Erfindung betrifft ein Verfahren und eine Vorrichtung zur Zubereitung einer Käsespeise sowie eine nach diesem Verfahren zubereitete Käsespeise.

Zur Zubereitung von Käsespeisen werden üblicherweise qualitativ hochwertige Käsesorten verwendet. Die Käserinde wird dabei regelmässig weggeschnitten und entsorgt, sofern der Käse nicht mitsamt der Käserinde geschmolzen wird.

Mittels bekannter Schneidvorrichtungen können Käsekörper, die mittels einer Fördervorrichtung zugeführt werden, in Scheiben geschnitten werden. Die Käserinde wird zumeist grosszügig weggeschnitten, so dass Scheiben mit einer Mindestgrösse resultieren, wie sie von den Konsumenten gewünscht werden. Restschnittgut, insbesondere Käserinde, welches in der Form, der Grösse und der Beschaffenheit nicht den Erwartungen der Konsumenten entspricht, lässt sich kaum weiter verwerten. Insbesondere fehlen ein Verwendungszweck und Produktionsmittel zur Verarbeitung des Restschnittguts, weshalb das Restschnittgut z.B. zu Tierfutter weiterverarbeitet wird.

Der vorliegenden Erfindung liegt die Aufgabe zugrunde, ein verbessertes Verfahren zur Zubereitung einer hochwertigen und besonders schmackhaften Käsespeise anzugeben, bei dem ein Restschnittgut aus Käse vorteilhaft verwertet werden kann. Ferner ist eine verbesserte Käsespeise zu schaffen, die auf der Restschnittgut aus Käse basiert.

Ferner liegt der Erfindung die Aufgabe zu Grunde, eine Schneidevorrichtung zu schaffen, mittels der ein Restschnittgut, insbesondere Käsereste aus einem vorangehenden Produktionsprozess, verarbeitet werden kann.

Das Verfahren soll es erlauben, die verbesserte Käsespeise mit einfachen Mitteln und Massnahmen kostengünstig herzustellen.

Der Käse soll speziell vorteilhaft und ökonomisch verarbeitet werden können. Insbesondere sollen auch besonders kostengünstige Käseanteile vorteilhaft genutzt werden.

Reste des Prozessguts sollen weitgehend unabhängig von Form und Grösse von der erfindungsgemässen Schneidevorrichtung bearbeitet werden können.

Diese Aufgaben werden mit einem Verfahren zur Zubereitung einer Käsespeise, einer Schneidevorrichtung zur Verarbeitung eines Restschnittguts sowie mit einer Käsespeise gelöst, welche die in Anspruch 1, 10 bzw. 15 angegebenen Merkmale aufweisen. Vorteilhafte Ausgestaltungen der Erfindung sind in weiteren Ansprüchen angegeben.

Das Verfahren dient der Zubereitung einer Käsespeise für die ein Käseprodukt und eine Stärkepflanze bereitgestellt, bearbeitet, erwärmt und gemischt werden.

Erfindungsgemäss ist das Käseprodukt ein aus der Verarbeitung von Käse resultierendes Restschnittgut, das eine Käserinde umfasst, und das durch Schneiden oder Reiben zerkleinert wird. Die Stärkepflanze wird erwärmt, püriert und anschliessend dem zerkleinerten Käseprodukt zugegeben, wonach das Käseprodukt und die pürierte Stärkepflanze gemischt und ausgeformt werden.

Aus der Verarbeitung von Käse resultierendes Restschnittgut wird erfindungsgemäss mittels einer Schneidevorrichtung bearbeitet, welche ein Greifvorrichtung mit wenigstens einem Greifwerkzeug umfasst, das mit einer pneumatischen Einheit verbunden ist.

Mittels des pneumatischen Greifwerkzeugs können Teile des Restschnittguts einfach erfasst, zum Schneidewerkzeug geführt und gehalten werden, während das gehaltene Teil vom Schneidewerkzeug weiter zerschnitten wird.

Damit das vom Greifwerkzeug pneumatisch gehaltene Käsestück während des Schneidevorganges nicht vom Greifwerkzeug getrennt wird, soll der Schneidevorgang möglichst widerstandsfrei erfolgen. Vorzugsweise wird daher ein Schneidewerkzeug eingesetzt, das mit Ultraschallenergie beaufschlagt wird. Das Käsestück kann vom Greifwerkzeug somit pneumatisch sicher gehalten und vom Schneidewerkzeug auf ein kleines Reststück zerschnitten werden.

Anhand des erfindungsgemässen Verfahrens kann somit ein vermeintliches Abfallprodukt aus Käse, nämlich Käserinde, vorteilhaft zu einer hochwertigen, fleischlosen aber besonders schmackhaften Käsespeise verarbeitet werden. Die Käsespeise überrascht durch einen besonders vorteilhaften Geschmack, welcher nach Ansicht von Testpersonen hinter bekannten Käsespezialitäten nicht zurücksteht. Besonders vorteilhaft ist, dass die Käsespezialität ausgewogen und ausserordentlich bekömmlich ist.

Käserinde, die bei anderen Produktionsprozessen weggeschnitten wird, wird gesammelt, zerschnitten, gehobelt oder zerrieben und als Schnittgut oder Reibgut für die weitere Bearbeitung bereitgestellt. Vorzugsweise wird ein Reibgut mit Reibpartikeln bereitgestellt, die eine Länge in einem Bereich von 1mm-5mm aufweisen. Besonders vorteilhaft ist, dass die Käserinde eine hohe Resistenz gegen äussere Einflüsse aufweist und gut zwischengelagert werden kann. In einem Vorprozess wird die Käserinde, ebenso wie die Stärkepflanze, vorzugsweise vor dem Zerkleinern vorgearbeitet und gereinigt. Die Käserinde weist eine hohe Geschmacksintensität auf, die beim Endprodukt vorteilhaft und kräftig in Erscheinung tritt. Mit kostengünstigem Rohmaterial wird daher eine ausgezeichnete Wirkung erzielt.

Die Stärkepflanze ist beispielsweise eine Rübenpflanze oder Knollenpflanze. Beispielsweise werden Kartoffeln und/oder Maniok verwendet. Vorzugsweise werden Stärkepflanzen verwendet, die einen besonders hohen Stärkeanteil aufweisen. Da unterschiedliche Stärkepflanzen auch unterschiedliche Geschmackseinflüsse mit sich bringen, können verschiedene Stärkepflanzen auch vorteilhaft miteinander gemischt werden. Der Kunde geniesst die Speise, meist jedoch nicht genau, welche Zutaten die Käsespeise umfasst.

Interessanterweise werden besonders vorteilhafte Geschmacksergebnisse erzielt, wenn Stärkepflanzen verwertet werden, ohne dass die Schale entfernt wird. Einerseits wird dadurch der Arbeitsaufwand reduziert. Andererseits treten durch die mitverarbeitete Schale Geschmackseinflüsse auf, die das Endprodukt vorteilhaft prägen können.

Aufgrund der den Geschmack des Endprodukts prägenden Bestandteile kann auf eine Zugabe von Gewürzen weitgehend verzichtet werden. Durch die Vermeidung oder zurückhaltende Dosierung von Gewürzen bleiben der Käsegeschmack und der Geschmack der Stärkepflanze gut erkennbar. Hingegen können Gewürze beigemischt werden, die dem Endprodukt eine besondere Note geben. Beispielsweise kann die Käsespeise an Grillspeisen, Fischspeisen oder an die asiatische Küche angepasst werden.

Besonders vorteilhaft kann Kaffee oder ein Kaffeeextrakt zugegeben werden, wobei der Kaffee oder der Kaffeeextrakt vorzugsweise der zerkleinerten Käserinde zugefügt und mit dieser vermischt wird. Mit der Zugabe von Kaffee können überraschende Geschmacksnoten erzielt werden. Testkonsumenten haben interessanterweise nicht den Kaffee als Zusatzstoff erkannt, sondern haben stattdessen Zwiebeln oder Knoblauch als Zusatzstoffe vermutet. Auch wurde ein Rauchgeschmack festgestellt. Durch Beimischung von Kaffee kann daher eine Mischung erzielt werden, die vorteilhaft zu Grillspeisen passt.

Die Stärkepflanzen werden vorzugsweise gegart, bis sie leicht püriert werden können. Beispielsweise werden die Stärkepflanzen in Wasser bei Temperaturen von 70°C bis 90°C so lange gegart, bis sie mit einer Gabel leicht zerdrückt werden können.

In besonders bevorzugten Zubereitungsformen wird der Käsespeise ein Zellulosederivat, wie Bestandteile einer Weizenfaser oder Methylcellulose, zugefügt. Das Zellulosederivat wird vorzugsweise der zerkleinerten Käserinde zugefügt und mit dieser vermischt. Das Zellulosederivat verleiht der Käsespeise eine gewünschte Festigkeit und erlaubt es, auf die Zugabe von weiteren Festigungsstoffen, wie Eiern zu verzichten. Methylcellulosen (Zusatzstoffnummer E 461) und andere chemisch modifizierte Derivate der Cellulose (E 463 bis 469) sind in der EU als Lebensmittelzusatzstoffe für Nahrungsmittelzwecke zugelassen und dienen als Geliermittel, Verdickungsmittel sowie als Emulgatoren und Stabilisatoren beispielsweise in Backwaren (siehe http://de.wikipedia.org/wiki/Methylcellulose). Die erfindungsgemässe Käsespeise an daher vorteilhaft auch für Konsumenten zubereitet werden, die sich für eine Ernährung ohne Fleisch und Eier entschieden haben. Diesbezüglich bildet die erfindungsgemässe Käsespeise eine wertvolle Nahrungsmittelergänzung.

Die fertig gestellte Mischung wird vorzugsweise in Portionen in Scheiben-Form, Wurst-Form, Teig-Form oder Hamburger-Form bereitgestellt.

Die gefertigten Portionen können herstellerseitig oder anwenderseitig frittiert werden, um sie für den Verzehr bereit zu machen (siehe http://de.wikipedia.org/wiki/Frittieren).

Alternativ wird die Mischung in Pulverform zur späteren Zubereitung durch den Konsumenten bereitgestellt. Beispielsweise nach Zugabe einer Flüssigkeit kann die Käsespeise innerhalb kürzester Zeit zubereitet und serviert werden.

Die Bestandteile der Käsespeise werden in relativ weiten Bereichen nach dem Geschmack der Konsumenten festgelegt. In Ländern, in denen Käsespeisen beliebt sind, werden höhere Käseanteile vorgesehen, als in Ländern, in denen Käse bei den Hauptmahlzeiten normalerweise nicht serviert wird. Aufgrund der verschiedenen Möglichkeiten, den Geschmack der Käsespeise zu variieren, lässt sich die Käsespeise jedoch an weite Konsumentenkreise anpassen.

Typischerweise wird der Anteil der Stärkepflanze in einem Bereich von 50% bis 80% und der Anteil des Käseprodukts in einem Bereich von 20% bis 50% der Käsespeise gewählt, wobei der Anteil der Stärkepflanze und des Käseprodukts zusammen vorzugsweise bei etwa 95% der Mischung liegt.

Obwohl mit den genannten Bestandteilen der Mischung ausgezeichnete Resultate erzielt werden, können auch weitere Bestandteile einzelnen oder in Kombination vorteilhaft zugegeben werden. Beispielsweise können Lauch, Zwiebeln, Knoblauch oder auch Fleisch, insbesondere Fleischwürfel, wie Speckwürfel, und Eier zugegeben werden. Es ist daher möglich, den Konsumenten verschiedene Variationen der Käsespeise anzubieten, die dessen Geschmack treffen und reichlich Abwechslung bieten.

Nachfolgend wird die Erfindung anhand von Zeichnungen näher erläutert. Dabei zeigt:
- Fig. 1: eine Vorrichtung zum Schneiden eines Prozessguts 8, umfassend eine Schneidevorrichtung 1 mit vier Schneidewerkzeugen 11A, ..., 11D, mittels denen das Prozessgut 8, welches in Form von Stangen 8A, ..., 8L auf einem Fördertisch 93 zugeführt wird, in Scheiben 89 geschnitten wird;
- Fig. 2: die Schneidevorrichtung 1 von Figur 1, mit zwei Antriebseinheiten 12A, 12B mittels denen die Schneidewerkzeuge 11A, ..., 11D in linearen Bewegungen nach unten und wieder nach oben verschiebbar sind;
- Fig. 3a: einen Teil der Schneidevorrichtung 1 von Figur 1, die mit einer Greifvorrichtung 5 versehen wurde, die zwei Greifwerkzeuge 51A, 51B aufweist, die mit einer pneumatischen Einheit 50 verbunden sind; und
- Fig. 3b: die Greifvorrichtung 5 von Figur 3a mit den beiden Greifwerkzeugen 51A, 51B, die ein Käsestück 80 halten.

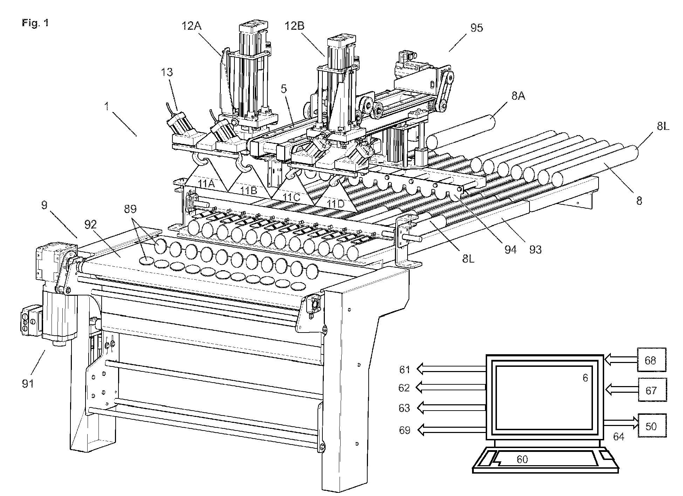

Figur 1 zeigt eine Vorrichtung, die zum Schneiden eines Prozessguts 8, insbesondere eines Nahrungsmittels, geeignet ist. Die Vorrichtung umfasst eine Schneidevorrichtung 1 mit vier Schneidewerkzeugen 11A, ..., 11D, eine Schubeinheit 95 mit einem Schubwerkzeug 94, zwei Antriebsvorrichtungen 12A, 12B für den Antrieb der Schneidewerkzeuge 11A, ..., 11D, und einen Fördertisch 3, auf dem das ACS gut 8 abgelegt und mittels des Schubwerkzeugs 94 hin zu den Schneidewerkzeugen 11A, ..., 11D gestossen werden kann. Die Schneidevorrichtung 1 wird von einer Montagestruktur 5 gehalten.

Schneidewerkzeugen, die mit Ultraschall beaufschlagt werden, sind beispielsweise aus der EP2551077A1 bekannt.

Das Nahrungsmittel 8 wird den vier Schneidewerkzeugen 11A, ..., 11D in zwölf zylinderförmigen oder stangenförmigen Einheiten 8A, ..., 8L parallel zugeführt, so dass jeweils drei der Nahrungsmitteleinheiten 8A, ..., 8L von einem der Schneidewerkzeuge 11A; ...; 11D gleichzeitig geschnitten werden. Frontseitig sind die parallel zugeführten Nahrungsmitteleinheiten 8A, ..., 8L von einem Niederhalter in einer gewünschten Position gehalten, während der Schnitt ausgeführt wird.

Die Schneideeinheit 1 umfasst die vier Schneidewerkzeuge 11A; ...; 11D, die je mit einem Ultraschallgenerator 13 verbunden sind und von den Antriebsvorrichtungen 12A, 12B vertikal abgesenkt und wieder angehoben werden können, um Nahrungsmittelscheiben 89 von den Nahrungsmitteleinheiten 8 abzuschneiden. Die Nahrungsmittelscheiben 89 fallen auf ein Förderband 92 eines Aufnahmeförderers 9, welcher einen Antriebsmotor 91 aufweist.

Ferner ist eine Steuereinheit 6 vorgesehen, welche die Schneidevorrichtung 1, die Fördervorrichtungen und die Ultraschallgeneratoren 13 steuern kann. Die Steuereinheit 6 ist über eine erste Steuerleitung 61 mit der Schneidevorrichtung 1, eine zweite Steuerleitung 62 mit den Fördervorrichtungen, eine dritte Steuerleitung 63 mit den Ultraschallgeneratoren 13 und eine vierte Steuerleitung 69 mit dem Abnahmeförderer 9 verbunden. Der Steuereinheit 6 sind über eine Tastatur 60 und von Messgeräten 68, wie Messungsformern und Sensoren, Informationen zuführbar, mittels denen der Schneideprozess und der Förderprozess gesteuert werden können. Mittels ersten Sensoren 68 werden beispielsweise Informationen zu den Positionen der Nahrungsmitteleinheiten 8 ermittelt. Mittels zweiten Sensoren 67 können weitere Prozessgrössen ermittelt werden. Vorzugsweise werden die Temperatur und die Konsistenz der Nahrungsmittel gemessen und in Abhängigkeit davon die Ultraschallfrequenz, die Schnittgeschwindigkeit und die Schubgeschwindigkeit eingestellt. Zur Steuerung aller Prozesse, insbesondere der Schneidprozesse und Förderprozesse ist ein Anwendungsprogramm vorgesehen.

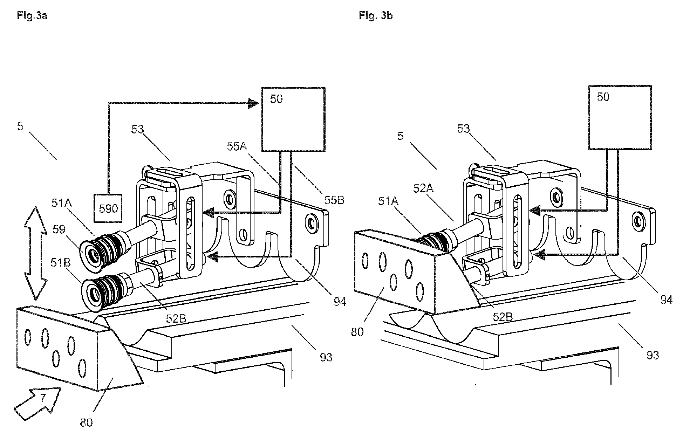

Die Steuereinheit 6 ist ferner mit einer pneumatischen Einheit 50 verbunden, die über pneumatische Leitungen 55A, 55B mit einer pneumatischen Greifvorrichtung 5 verbunden ist, die nachstehend mit Bezug auf Figur 3a näher erläutert wird.

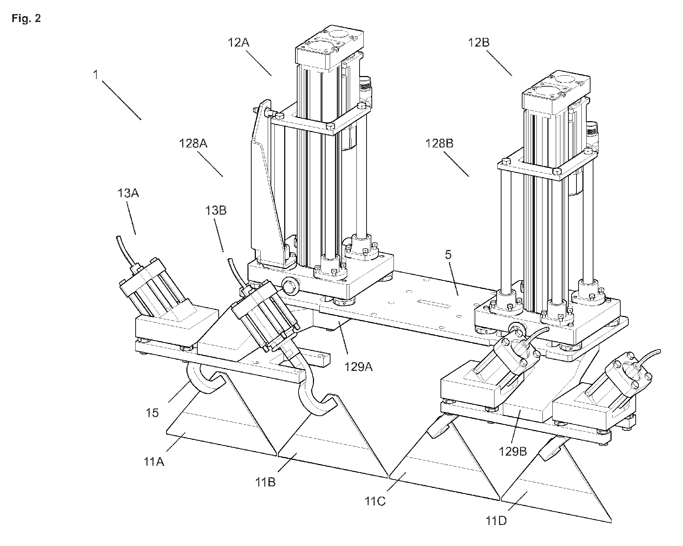

Figur 2 zeigt die demontierte Schneidevorrichtung 1 von Figur 1, die zwei identisch aufgebaute Schneidemodule umfasst, die von einer Montageplatte gehalten sind, die Teil der Montagestruktur 5 der Vorrichtung ist. Jedes der Schneidemodule umfasst eine Antriebseinheit 12A; 12B und eine mit der Montagestruktur 5 verbundene Lagervorrichtung 128A; 128B, welche es erlaubt, einen zugehörigen ersten bzw. zweiten Lagerblock 129A, 129B vertikal abzusenken und wieder anzuheben. An jedem Lagerblock 129A; 129B sind je zwei Ultraschallgeneratoren 13A, 13B bzw. 13C, 13D angeordnet, welche je über ein Kopplungselement 15 mit einem Schneidewerkzeug 11A, 11B, 11C oder 11D verbunden sind.

Die Schneidewerkzeuge 11A, ..., 11D umfassen je eine Klinge, an deren Rücken die in einem Bogen verlaufenden Kopplungselemente 15 angeschweisst sind, wodurch die Ultraschallenergie in die Klingen eingekoppelt werden kann.

Mit diesen Schneidewerkzeugen 11A, ..., 11D können die Nahrungsmitteleinheiten 8A, ..., 8L praktisch ohne Kraftaufwand geschnitten werden. Während des Schneidevorgangs wirken daher praktisch keine Kräfte auf das Nahrungsmittel ein, weshalb eine maximale Präzision erzielt wird.

Die Schneidvorrichtung 1 in der Ausgestaltung von Figur 1 ist geeignet stangenförmiges Prozessgut 8 zu schneiden. Für Schnittgut, welches beim Zerschneiden von Käse entsteht, ist diese Schneidevorrichtung 1 jedoch nicht vorgesehen. Käsereste mit Käserinde werden daher entsorgt oder zu Produkten mit geringem Wert verarbeitet.

Erfindungsgemäss werden Schneidvorrichtungen mit einer pneumatischen Greifvorrichtung 5 versehen, welche Teile eines Restschnittguts, insbesondere Käsereste 80, erfassen und einem Schneidewerkzeug zuführen kann, welches vorzugsweise mit Ultraschallenergie beaufschlagt wird.

Exemplarisch ist in Figur 3a gezeigt, dass die Schneidevorrichtung 1 von Figur 1 vorteilhaft mit einer pneumatischen Greifvorrichtung 5 versehen werden kann. Das pneumatisch gehaltene Restschnittgut kann daher mittels der beschriebenen Schneidewerkzeuge 1A, ..., 1D bearbeitet bzw. zerschnitten werden.

Die Greifvorrichtung 5 ist vom Schubwerkzeug 94 der Schneidevorrichtung 1 von Figur 1 gehalten. Die Greifvorrichtung 5 umfasst eine Halterung 53, die zwei Greifwerkzeuge 51A, 51B hält, die vorzugsweise beweglich gelagert und mittels einer Antriebsvorrichtung bewegbar sind.

Die Greifwerkzeuge 51A, 51B umfassen je ein Saugrohr 52A, 52B, das frontseitig mit einem Saugkopf 59 und rückseitig über eine pneumatische Leitung 55A, 55B mit einer pneumatischen Einheit 50 verbunden ist, die der Abgabe eines Unterdrucks an die Saugrohre 52A, 52B dient. Die pneumatischen Einheit 50 ist über eine Steuerleitung 64 mit der Steuereinheit 6 verbunden und von dieser steuerbar. In Figur 3a ist ein im Saugkopf 59 vorgesehener Sensor 590, beispielsweise ein optischer Sensor oder ein Drucksensor, gezeigt, mittels dessen feststellbar ist, ob am Greifwerkzeug 51A ein Käsestück 80 anliegt, welches vorzugsweise von einer Fördervorrichtung 7, beispielsweise einem Förderband, zugeführt wird. Sobald das Käsestück 80 die Greifwerkzeuge 51A, 51B erreicht hat, sendet der Sensor 590 ein Signal an die Steuereinheit 6 oder direkt an die pneumatische Einheit 50, welche in der Folge einen Unterdruck an die Greifwerkzeuge 51A, 51B anliegt. Das Käsestück 80 wird somit pneumatisch erfasst und kann dem Schneidewerkzeug 11A zugeführt werden. Die Greifvorrichtung 5 kann dabei derart ausgestaltet werden, dass die Greifwerkzeuge 51A, 51B entlang beliebigen Bahnen verschoben werden können. Die mit dem Schubwerkzeug 94 verbundene Halterung 53 kam zumindest vor und zurück bewegt werden, nachdem das Käsestück 80 erfasst wurde.

Figur 3b zeigt die Greifvorrichtung 5 von Figur 3a, nachdem das Käsestück von beiden Greifwerkzeugen 51A, 51B erfasst wurde. Mit dem Käsestück 80 kann die Greifvorrichtung 5 durch die Schubvorrichtung 94 nun nach vorn oder zurück verschoben werden, bis das Käsestück 80 sich im Wirkungsbereich eines der Schneidwerkzeuge 11A, ..., 11D von Figur 2 befindet.

Der Prozess zum Erfassen und Bearbeiten des Käsestücks 80 kann durch Sensoren, insbesondere optische Sensoren oder durch eine Kamera überwacht werden. Anhand der Messdaten kann die Schneidevorrichtung 1 mit der Greifvorrichtung 5 entsprechend gesteuert werden.

## Patentansprüche

1. Verfahren zur Zubereitung einer Käsespeise umfassend die Bereitstellung eines Käseprodukts und einer Stärkepflanze, die in bearbeitetem Zustand miteinander gemischt werden, **dadurch gekennzeichnet,**
**dass** das Käseprodukt ein aus der Verarbeitung von Käse resultierendes Restschnittgut ist, das eine Käserinde umfasst,
**dass** das Schnittgut durch Schneiden oder Reiben oder zerkleinert wird;
**dass** die Stärkepflanze erwärmt, püriert und anschliessend dem zerkleinerten Käseprodukt zugegeben wird;
**dass** das Käseprodukt und die pürierte Stärkepflanze gemischt und ausgeformt werden.

2. Verfahren nach Anspruch 1, **dadurch gekennzeichnet, dass** die Stärkepflanze eine Rübenpflanze oder Knollenpflanze ist, wie Kartoffeln oder Maniok.

3. Verfahren nach Anspruch 1 oder 2, **dadurch gekennzeichnet, dass** Stärkepflanze mit der Schale verarbeitet wird.

4. Verfahren nach Anspruch 1, 2 oder 3, **dadurch gekennzeichnet, dass** die Stärkepflanze bei einer Temperatur von etwa 75 °C bis 90 °C püriert und mit dem Käseprodukt gemischt wird und/oder dass die Mischung aus dem Käseprodukt und der Stärkepflanze bei einer Temperatur zwischen 40°C und 60°C ausgeformt wird.

5. Verfahren einem der Ansprüche 1 - 4, **dadurch gekennzeichnet, dass** die Käserinde auf Teile mit einer Länge von einer Länge von 1mm - 5mm zerrieben wird.

6. Verfahren nach einem der Ansprüche 1 - 5, **dadurch gekennzeichnet, dass** der Käsespeise ein Zellulosederivat, wie Bestandteile einer Weizenfaser oder Methylcellulose, zugefügt wird, wobei das Zellulosederivat vorzugsweise der zerkleinerten Käserinde zugefügt und mit dieser vermischt wird.

7. Verfahren nach einem der Ansprüche 1 - 6, **dadurch gekennzeichnet, dass** der Käsespeise Kaffee oder Kaffeeextrakt zugeführt wird, wobei der Kaffee oder der Kaffeeextrakt vorzugsweise der zerkleinerten Käserinde zugefügt und mit dieser vermischt wird.

8. Verfahren nach einem der Ansprüche 1 - 7, **dadurch gekennzeichnet, dass** die Mischung vorzugsweise in Portionen in Scheiben-Form, Wurst-Form, Teig-Form oder Hamburger-Form bereitgestellt wird oder dass die gefertigte Mischung in Pulverform zur späteren Zubereitung durch den Konsumenten bereitgestellt wird und/oder dass die gefertigten Portionen frittiert werden.

9. Verfahren nach einem der Ansprüche 1 - 8, **dadurch gekennzeichnet, dass** der Anteil der Stärkepflanze in einem Bereich von 50% bis 80% gewählt wird und dass der Anteil des Käseprodukts in einem Bereich von 20% bis 50% gewählt wird, wobei der Anteil der Stärkepflanze und des Käseprodukts zusammen vorzugsweise bei etwa 95% der Mischung liegt.

10. Schneidvorrichtung (1) mit einer Steuereinheit (6), mittels der wenigstens ein Schneidewerkzeug (11A; ...; 11D) steuerbar ist, um Schnittgut (80), insbesondere Käserinde und Käseresten für die zur Zubereitung einer Käsespeise nach einem der Ansprüche 1 - 10 zu zerschneiden, **dadurch gekennzeichnet, dass** eine Greifvorrichtung (5) mit wenigstens einem Greifwerkzeug (51A, 51B) vorgesehen ist, das ein gegebenenfalls mit einem Saugkopf versehenes Saugrohr (52A; 52B) aufweist, das über eine pneumatische Leitung (55A, 55B) mit einer pneumatischen Einheit (50) verbunden ist, die über eine Steuerleitung (64) mit der Steuereinheit (6) verbunden ist, und dass das Greifwerkzeug (51A, 51B) mit einer Halterung (53) verbunden ist, mittels der das Greifwerkzeug (51A, 51B) zwischen wenigstens zwei Positionen verschiebbar ist, um das Schnittgut (80) aufzunehmen und/oder dem Schneidewerkzeug (11A; ...; 11D) zuzuführen.

11. Schneidvorrichtung (1) nach Anspruch 10, **dadurch gekennzeichnet, dass** die Halterung (53) mit einem Schubwerkzeug (94) und einer Antriebsvorrichtung (95) verbunden ist und dass die Greifvorrichtung (5) vertikal und/oder horizontal verschiebbar ist.

12. Schneidvorrichtung (1) nach Anspruch 10 oder 11, **dadurch gekennzeichnet, dass** die Greifvorrichtung (5) wenigstens zwei zueinander korrespondierende Greifwerkzeuge (51A, 51B) aufweist, die dem gemeinsamen Halten eines Schnittgutteils (80) dienen.

13. Schneidvorrichtung (1) nach Anspruch 10, 11 oder 12, **dadurch gekennzeichnet, dass** eine Fördervorrichtung (7) vorgesehen ist, mittels der das Schnittgut (80) der Greifvorrichtung (5) zuführbar ist.

14. Schneidvorrichtung (1) nach Anspruch 13, **dadurch gekennzeichnet, dass** Schneidewerkzeug (11A; ...; 11D) mit einer Ultraschallquelle verbunden ist.

15. Käsespeise hergestellt nach einem Verfahren gemäss einem der Ansprüche 1 - 9.
